# EUROPEAN PATENT SPECIFICATION

(11) **EP 4 292 797 B1**
(45) Date of publication and mention of the grant of the patent: **06.11.2024**
(21) Application number: 22178954.8
(22) Date of filing: 14.06.2022
(51) Int. Cl.: B29C 64/25, B33Y 30/00, B22F 10/28, B22F 12/00, B29C 64/232, B29C 64/255

(54) **APPARATUS FOR ADDITIVE MANUFACTURING HAVING A CONCEALABLE LID HOLDER**
APPARAT ZUR GENERATIVEN FERTIGUNG MIT EINEM VERDECKBAREN DECKELHALTER
APPAREIL DE FABRICATION ADDITIVE COMPORTANT UN SUPPORT DISSIMULABLE DE COUVERCLE

(43) Date of publication of application: 20.12.2023
(73) Proprietor: TRUMPF Additive Manufacturing Italia S.r.l., 36015 Schio (VI) (IT)
(72) Inventor: Guzzonato, Alessio, 36015 Cogollo del Cengio (IT); Zenere, Silvio, 36010 Chiuppano (VI) (IT)
(74) Representative: Trumpf Patentabteilung

(56) References cited:
- EP-A1- 3 263 316
- WO-A1-2022/093943
- WO-A1-2022/112801
- DE-A1- 102018 202 644

## Description

### Background of the invention

The invention relates to an apparatus for additive manufacturing of a workpiece with a laser beam, the apparatus having a process chamber through which the laser beam is radiated, and the process chamber having an opening in its interior which can be closed by a lid.

US 2006/0066188 A1 discloses a shelf (a furniture), which is recessable in a ceiling.

DE 10 2018 202 644 A1 discloses an aforementioned apparatus for additive manufacturing of a workpiece with a laser beam according to the preamble of claim 1. A lid is freely accessible in a process chamber so that the lid can become contaminated during manufacturing of the workpiece.

EP 3 263 316 A1 discloses three-dimensional (3D) printing processes, apparatuses, software, and systems for the production of at least one desired 3D object. The 3D printer system (e.g., comprising a processing chamber, build module, or an unpacking station) retains a desired (e.g., inert) atmosphere around the material bed and/or 3D object at multiple 3D printing stages. The 3D printer comprises one or more build modules that have a controller separate from the controller of the processing chamber. The 3D printer further comprises a platform that is automatically constructed.

### Object of the invention

It is therefore an object of the invention to provide an apparatus for additive manufacturing that allows significantly cleaner manufacturing in a very effective manner.

### Description of the invention

This object is solved according to the invention by an apparatus according to claim 1. The dependent claims represent preferred further embodiments.

Thus, the object of the invention is inter alia solved by an aforementioned apparatus, wherein a lid holder is arranged in the process chamber, in which the lid can be stored, the lid being removable from the lid holder in an open state of the lid holder and being closed towards the interior of the process chamber in a closed state of the lid holder.

By this, the lid can both be provided in the interior of the process chamber and be concealed when necessary.

The apparatus may comprise a workpiece container for the workpiece and/or a powder container. The workpiece container and/or the powder container can be connected to the process chamber via an opening. One or both opening(s) can be closed with a lid, storable in the lid holder. Preferably, both openings can be closed with the same lid.

The apparatus can be configured for powder bed based manufacturing. The invention is particularly suitable for such an apparatus.

Preferably, the lid holder is configured for storing a plurality of lids.

To avoid obstructions during fabrication of the workpiece, the lid holder is preferably at least partially movable out of the interior of the process chamber.

In a particularly preferred embodiment, the lid holder is mostly, in particular completely, movable out of the interior of the process chamber.

The lid holder is particularly accessible, when the lid holder is at least partially concealable behind an inner wall of the process chamber, wherein the inner wall is in the form of a ceiling of the process chamber.

The lid holder can be completely concealed, if a part of the lid holder, in particular a bottom plate of the lid holder, aligns with an inner wall of the process chamber, in particular with the ceiling of the process chamber.

The lid holder may comprise a soft-close system for softly moving the lid holder in the closed state and/or the open state. A soft-close system refers to a damping technology for low-noise and smooth closing. The system is often also called self-closing. A soft-close system is equipped with a spring and a damper. When it is opened, the spring stretches on the one hand and the damper extends on the other. When it is closed, the spring relaxes and the damper automatically slows down the closing process. The soft-close system may be incorporated into at least one column, preferably in two columns, of the lid holder. Such (a) column(s) may be arranged between a bottom plate and a top plate of the lid holder.

Alternatively or additionally, the lid holder may comprise a push-to open system. A push to open system requires a push to release the face of the lid holder. A latching mechanism comprises a spring and a trigger. When the face of the lid holder is pushed, the trigger engages the spring, making it push the lid holder back in direction. The spring may release the lid holder partially, letting the operator do the rest of the job with her/his hand. The push-to open system may be incorporated into at least one column, preferably in two columns, of the lid holder.

According to an example, the process chamber may be designed as a glovebox. By this, handling inside the process chamber can be done without opening the process chamber.

The apparatus may comprise at least one lid, preferably several lids, in the lid holder.

Further advantages of the invention can be seen in the description and the drawing. Likewise, the above-mentioned features and those described in more detail can be applied individually or in any combination in accordance with the invention. The embodiments shown and described are not to be understood as a conclusive list, but rather have an exemplary character for the description of the invention.

### Detailed description of the invention and drawing

- Fig. 1a: shows a perspective view of an apparatus for additive manufacturing of a workpiece in a process chamber. A lid holder is concealed in the ceiling of the process chamber.
- Fig. 1b: shows the apparatus according to Fig. 1a, the lid holder being ex-tended into the process chamber.
- Figs. 2a, b: show perspective views of an embodiment of a lid holder.
- Figs. 3a, b: show perspective views of another embodiment of a lid holder.

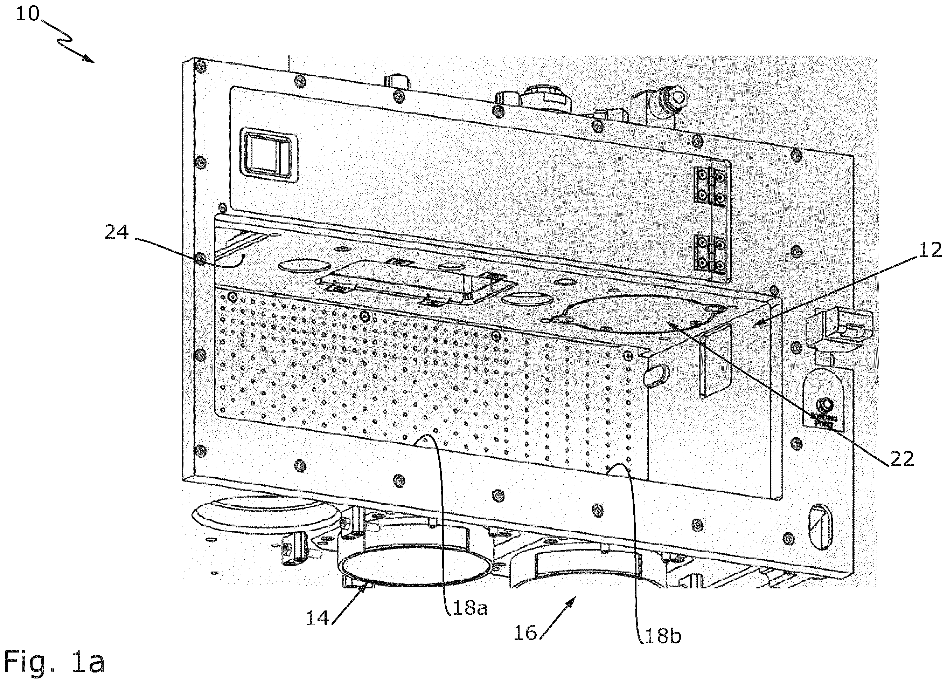

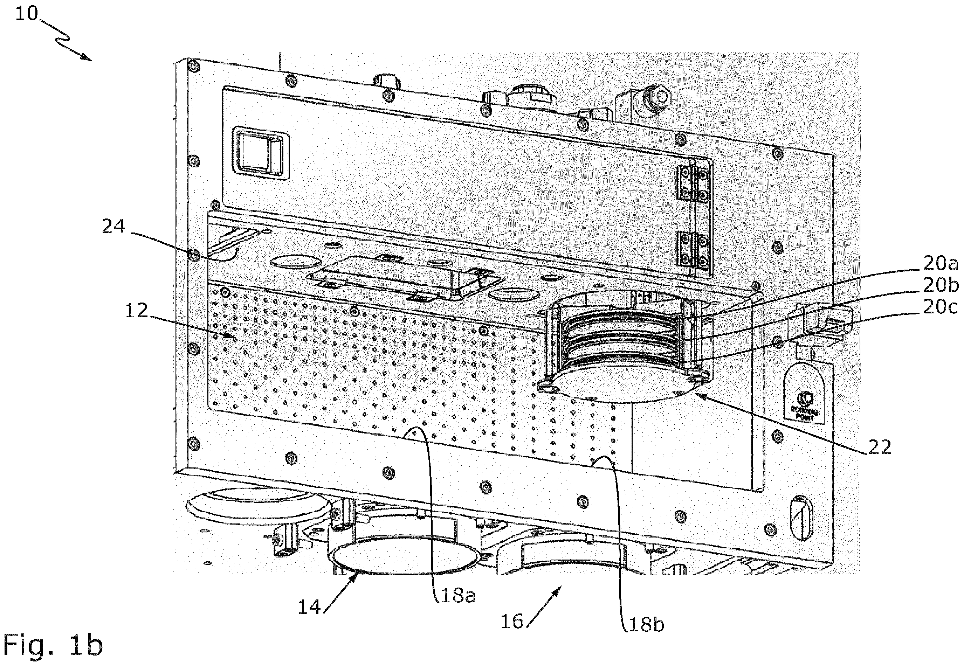

**Figs. 1a**, b show an apparatus **10** for powder bed based additive manufacturing of a workpiece with a laser beam. The apparatus 10 comprises a process chamber **12,** a workpiece container **14** and a powder container **16.** The workpiece container 14 and the powder container 16 are each connected to the process chamber 12 via an opening **18a, 18b.**

The openings 18a, b can be closed with a lid **20a, 20b, 20c** (see fig. 1b). In the case at hand, both openings 18a, b can be closed with the same lid 20a-c. The lids 20a-c prevent contamination of the containers 14, 16 when they are not in use. On the other hand, when the lids (20a-c) are not in use, they can be prevented from being contaminated by storing the lids (20a-c) in a lid holder **22.**

The lid holder 22 can be moved at least partially into the process chamber 12 (see fig. 1b). In that open state, an operator can take a lid 20a-c and put it on one of the openings 18a, b. When the lid holder 22 is not needed any more, it can, at least partially, in particular mostly, preferably completely, be hidden from the interior of the process chamber 12 (see fig. 1a). According to the invention, the lid holder 22 can be hidden behind an inner wall **24** in the form of a ceiling of the process chamber 12 in the closed state of the lid holder 22.

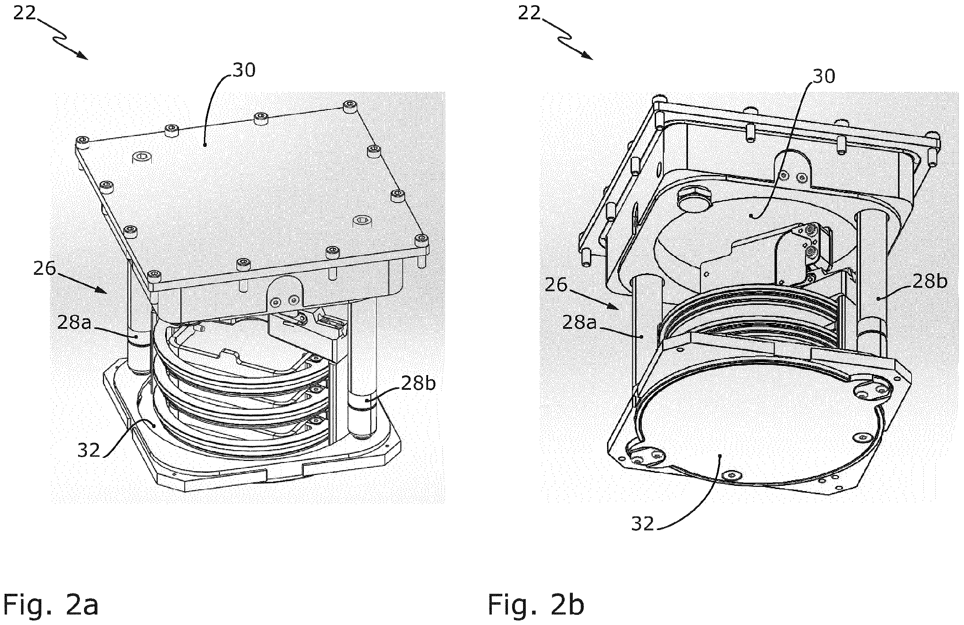

**Figs. 2a**, b show an embodiment of a lid holder 22 having an extraction mechanism **26.** The extraction mechanism 26 comprises at least one extractable column **28a, 28b,** preferably - as in the case at hand - two extractable columns 28a, b. The at least one extractable column 28a, b is arranged between a top plate **30** and a bottom plate **32**. According to the invention, the bottom plate 32 aligns with the inner wall 24 in the form of a ceiling of the process chamber 12 (see fig. 1a) in the closed state of the lid holder 22.

In order to provide comfortable opening and closing behavior, the at least one column 28a, b may comprise a soft-close system and/or a push-to-open system for moving the lid holder 22 into the open state and/or the closed state.

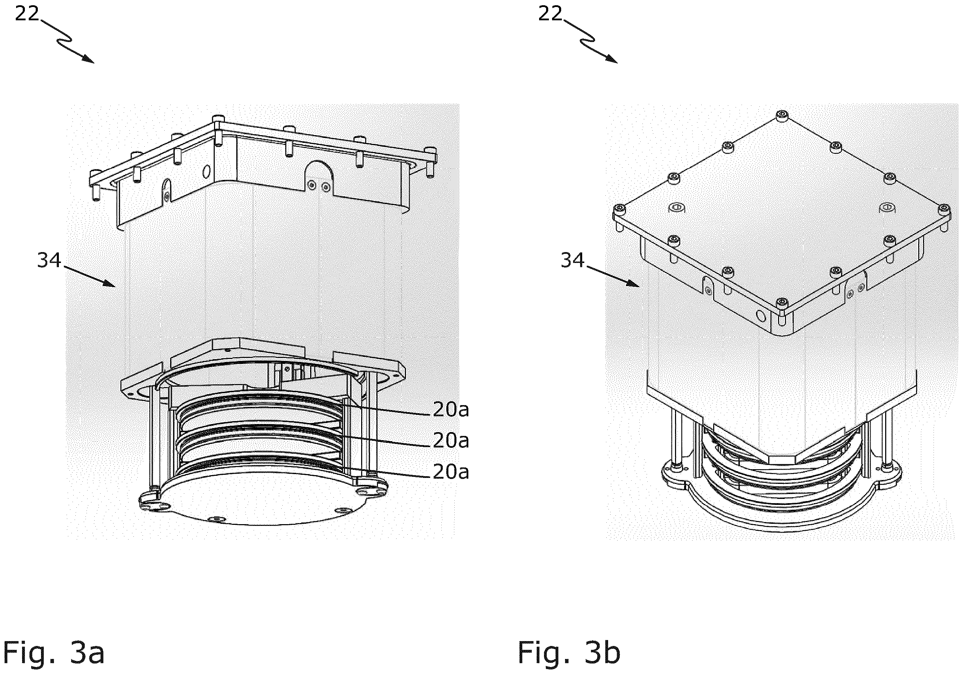

**Figs. 3a**, b show an embodiment of a lid holder 22 being configured in the same way as the lid holder 22 according to figs. 2a, b. However, the lid holder 22 shown in figs. 3a, b comprises a housing **34** covering lids 20a-c (see fig. 3a) in the closed state of the lid holder 22.

Taking a synopsis of all the figures in the drawing, the invention relates in summary to an apparatus 10 for additive manufacturing of a workpiece with a laser beam. Preferably, the apparatus 10 is designed to build up the workpiece in layers, each layer consisting of powder which is at least locally connected by the laser beam. The workpiece can be manufactured in a workpiece container 14 with a lowerable and liftable holder, and the powder can be provided from a powder container 16. Preferably, the workpiece container 14 and/or the powder container 16 is/are each connected to a process chamber 12 of the apparatus 10 via an opening 18a, b. The opening(s) 18a, b can each be closed with a lid 20a-c, which can be stored in a lid holder 22. The lid holder 22 preferably projects into the process chamber 12 in its open state and is hidden behind an inner wall 24 of the process chamber 12 in its closed state. A bottom plate 32 of the lid holder 22 can be aligned with the inner wall 24 in the closed state of the lid holder 22.

### List of reference signs

- 10: apparatus
- 12: process chamber
- 14: workpiece container
- 16: powder container
- 18a, b: opening
- 20a-c: lid
- 22: lid holder
- 24: inner wall of the process chamber 12
- 26: extraction mechanism
- 28a, b: extractable column
- 30: top plate of the lid holder 22
- 32: bottom plate of the lid holder 22
- 34: housing of the lid holder 22

## Claims

1. Apparatus (10) for additive manufacturing of a workpiece with a laser beam, the apparatus (10) having a process chamber (12) through which the laser beam is radiated, the process chamber having an opening (18a, b) in its interior which can be closed by a lid (20a-c);
wherein a lid holder (22) is arranged in the process chamber (12), in which the lid (20a-c) can be arranged, the lid (20a-c) being removable from the lid holder (22) in an open state of the lid holder (22) and the lid holder (22) being closed towards the process chamber (12) in its closed state,
wherein the lid holder (22) is movable into the closed state at least partially behind an inner wall (24) of the process chamber (12),
**characterized in that** the lid holder (22) is movable into the closed state behind an inner wall (24) in the form of a ceiling of the process chamber (12), and
wherein a bottom plate (32) of the lid holder (22) is aligned with the inner wall (24) in the closed state of the lid holder (22).

2. The apparatus of claim 1, wherein the apparatus (10) comprises:
a) a workpiece container (14) connected to the process chamber (12) via the opening (18a, b), having a holder on which the workpiece can be placed during its manufacture; and/or
b) a powder container (16) connected to the process chamber (12) via the opening (18a, b).

3. The apparatus according to any one of the preceding claims, in which the apparatus (10) is designed for powder bed based manufacturing of the workpiece.

4. The apparatus according to any one of the preceding claims, in which the lid holder (22) is designed to hold a plurality of lids (20a-c).

5. The apparatus according to any one of the preceding claims, wherein the lid holder (22) is movable into the closed state behind an inner wall (24) of the process chamber (12).

6. The apparatus according to any one of the preceding claims, in which a part of the lid holder (22) aligns with the inner wall (24) of the process chamber (12) in the closed state of the lid holder (22).

7. The apparatus according to any one of the preceding claims, having a lid (20a-c) disposed in the lid holder (22).

## Patentansprüche

1. Einrichtung (10) für die additive Fertigung eines Werkstücks mit einem Laserstrahl, wobei die Einrichtung (10) eine Prozesskammer (12) aufweist, durch welche der Laserstrahl ausgebreitet wird, wobei die Prozesskammer eine Öffnung (18a, b) in ihrem Inneren aufweist, die durch einen Deckel (20a-c) verschlossen werden kann; wobei eine Deckelhalterung (22) in der Prozesskammer (12) angeordnet ist, in welcher der Deckel (20a-c) angeordnet werden kann, wobei der Deckel (20a-c) in einem offenen Zustand der Deckelhalterung (22) von der Deckelhalterung (22) abgenommen werden kann und die Deckelhalterung (22) in ihrem geschlossenen Zustand in Richtung der Prozesskammer (12) geschlossen ist,
wobei die Deckelhalterung (22) zumindest teilweise hinter einer Innenwand (24) der Prozesskammer (12) in den geschlossenen Zustand bewegt werden kann, **gekennzeichnet dadurch, dass**
die Deckelhalterung (22) hinter einer Innenwand (24) in der Form einer Decke der Prozesskammer (12) in den geschlossenen Zustand bewegt werden kann, und
wobei eine Bodenplatte (32) der Deckelhalterung (22) in dem geschlossenen Zustand der Deckelhalterung (22) an der Innenwand (24) ausgerichtet ist.

2. Einrichtung nach Anspruch 1, wobei die Einrichtung (10) Folgendes umfasst:
a) einen mit der Prozesskammer (12) über die Öffnung (18a, b) verbundenen Werkstückbehälter (14), der eine Halterung aufweist, auf welcher das Werkstück während seiner Fertigung platziert werden kann; und/oder
b) einen mit der Prozesskammer (12) über die Öffnung (18a, b) verbundenen Pulverbehälter (16).

3. Einrichtung gemäß einem der vorstehenden Ansprüche, in welchem die Einrichtung (10) für eine pulverbettbasierte Fertigung des Werkstücks ausgelegt ist.

4. Einrichtung gemäß einem der vorstehenden Ansprüche, in welchem die Deckelhalterung (22) dazu ausgelegt ist, eine Vielzahl von Deckeln (20a-c) zu halten.

5. Einrichtung gemäß einem der vorstehenden Ansprüche, wobei die Deckelhalterung (22) hinter einer Innenwand (24) der Prozesskammer (12) in den geschlossenen Zustand bewegt werden kann.

6. Einrichtung gemäß einem der vorstehenden Ansprüche, in welchem ein Teil der Deckelhalterung (22) in dem geschlossenen Zustand der Deckelhalterung (22) an der Innenwand (24) der Prozesskammer (12) ausgerichtet ist.

7. Einrichtung gemäß einem der vorstehenden Ansprüche, die einen Deckel (20a-c) aufweist, der in der Deckelhalterung (22) angebracht ist.

## Revendications

1. Appareil (10) pour la fabrication additive d'une pièce avec un faisceau laser, l'appareil (10) comportant une chambre de traitement (12) à travers laquelle le faisceau laser est émis, la chambre de traitement comportant une ouverture (18a, b) interne qui peut être fermée par un couvercle (20a-c) ;
dans lequel un support de couvercle (22) est agencé dans la chambre de traitement (12), où le couvercle (20a-c) peut être agencé, le couvercle (20a-c) pouvant être retiré du support de couvercle (22) dans un état ouvert du support de couvercle (22) et le support de couvercle (22) étant fermé vers la chambre de traitement (12) dans son état fermé,
dans lequel le support de couvercle (22) peut être déplacé dans l'état fermé au moins partiellement derrière une paroi interne (24) de la chambre de traitement (12), **caractérisé en ce que**
le support de couvercle (22) peut être déplacé dans l'état fermé derrière une paroi interne (24) sous la forme d'un plafond de la chambre de traitement (12), et
dans lequel une plaque inférieure (32) du support de couvercle (22) est alignée avec la paroi interne (24) dans l'état fermé du support de couvercle (22).

2. Appareil de la revendication 1, dans lequel l'appareil (10) comprend :
a) un bac de pièces (14) connecté à la chambre de traitement (12) via l'ouverture (18a, b), comportant un support sur lequel la pièce peut être placée pendant sa fabrication ; et/ou
b) un bac de poudre (16) connecté à la chambre de traitement (12) via l'ouverture (18a, b).

3. Appareil selon l'une quelconque des revendications précédentes, dans lequel l'appareil (10) est conçu pour une fabrication de la pièce sur un lit de poudre.

4. Appareil selon l'une quelconque des revendications précédentes, dans lequel le support de couvercle (22) est conçu pour supporter une pluralité de couvercles (20a-c).

5. Appareil selon l'une quelconque des revendications précédentes, dans lequel le support de couvercle (22) peut être déplacé dans l'état fermé derrière une paroi interne (24) de la chambre de traitement (12).

6. Appareil selon l'une quelconque des revendications précédentes, dans lequel une partie du support de couvercle (22) est alignée avec la paroi interne (24) de la chambre de traitement (12) dans l'état fermé du support de couvercle (22).

7. Appareil selon l'une quelconque des revendications précédentes, comportant un couvercle (20a-c) disposé dans le support de couvercle (22).
